# EUROPÄISCHE PATENTANMELDUNG

(11) **EP 2 546 710 A1**
(43) Veröffentlichungstag der Anmeldung: **16.01.2013**
(21) Anmeldenummer: 11173773.0
(22) Anmeldetag: 13.07.2011
(51) Int. Cl.: G05B 19/408

(54) **Bahnkurvenberechnung**

(71) Anmelder: SIEMENS AKTIENGESELLSCHAFT, 80333 München (DE)
(72) Erfinder: Schwarz, Andreas, 90562 Kalchreuth (DE); Hennefelder, Thomas, 91484 Markt Sugenheim (DE); Lenzer, Marion, 91085 Weisendorf (DE)

(57) **Zusammenfassung**

Die Erfindung betrifft ein Verfahren zur Berechnung einer Bahnkurve (1,2,3) für eine Maschine, wobei die Bahnkurve (1, 2,3) in Bahnsegmente (50 bis 61) segmentiert ist, wobei die Bahnkurve (1,2,3) einer normierten Grundkontur (10) entspricht. Aus der normierten Grundstruktur können weitere Bahnkurven durch Koeffiziententausch in Funktionen zur Beschreibung der Bahnkurve (1,2,3) berechnet werden.

## Beschreibung

Die Erfindung betrifft eine Bahnkurvensteuerung/-regelung bzw. eine Bahnkurvenberechnung.

Bahnkurven werden beispielsweise bei Werkzeugmaschinen zum Zwecke der Bewegung eines Werkzeugs berechnet. Dies kann einachsige sowie mehrachsige Werkzeugmaschinen betreffen, wobei mittels einer Werkzeugmaschine beispielsweise ein Bohrvorgang, ein Fräsvorgang, und/oder auch ein Schleifvorgang durchführbar sind. Bei mehrachsigen Maschinen wird durch koordinierte Bewegungen der verschiedenen Maschinenachsen beispielsweise ein Bohrer oder Fräser auf einer Bahnkurve im Raum bewegt, um so an einem Werkstück bestimmte Konturen zu erzeugen. Neben Werkzeugmaschinen, welche bei der Bearbeitung eines Werkstückes zum Einsatz kommen, werden Bahnkurven auch bei Produktionsmaschinen wie auch Robotern berechnet und verwendet. Produktionsmaschinen sind beispielsweise Pressen, Papiermaschinen, Druckmaschinen, Verpackungsmaschinen, Schlauchbeutelmaschinen, Holzverarbeitungsmaschinen, usw. Bahnkurven finden z.B. auch Anwendung in der Lebensmitteltechnik beim Aufbringen von Sahne, Schokoladenguss, Zuckerguss, usw. auf Produkten wie einer Sahnetorte oder einem Pudding. Des Weiteren können Bahnkurven bei der Aufbringung von Leimspuren verwendet werden, wie dies beispielhaft in der Möbelindustrie oder auch in der Verpackungsindustrie notwendig ist. Mittels Leim können so Kartonagen, Hölzer, Kunststoffe, Metalle usw. verklebt werden. Auch beim Schneiden geometrischer Formen in unterschiedlichem Material oder auch bei Schweiß- bzw. Schleif-Arbeiten ist die Heranziehung von Bahnkurven bei der Automatisierung eines Bewegungsablaufes vorteilhaft.

Eine abzufahrende Bahnkurve wird beispielsweise mittels einer oder mehrerer elektronischer Kurvenscheiben hinterlegt. Bei Änderung einer Produktgröße, einer Produkteigenschaft, also allgemein einer Prozessgröße, soll häufig die gleiche geometrische Grundform der Bahnkurve, auf die jeweilige neue aktuelle Produkteigenschaft bzw. den neuen Prozess skaliert, abgefahren werden. Die Grundform ist dann zwar gleich geblieben, jedoch können sich die Randbedingungen wie beispielsweise die Größe eines Objektes, welches es zu bearbeiten gilt, geändert haben.

Eine Aufgabe der vorliegenden Erfindung ist es nunmehr eine einfache Veränderung einer Bahnkurve zu ermögliche, so dass bei geänderten Größen bzw. Parametern eine Anpassung der Bahnkurve in einfacher Weise erfolgen kann.

Die Aufgabe wird durch ein Verfahren gemäß Patentanspruch 1 gelöst. Weitere Ausgestaltungen der Erfindung sind in den Ansprüchen 2 bis 7 beschrieben.

Bei einer Berechnung einer Bahnkurve für eine Maschine wird die Bahnkurve in Bahnsegmente segmentiert. Als Maschinen kommen dabei beispielsweise die in der Einführung angesprochenen Maschinen in den jeweiligen Anwendungsfällen in betracht. Der Bahnkurve wird dabei insbesondere eine normierte Grundkontur zu Grunde gelegt. Die Bahnkurve kann folglich einer Grundkontur zugeordnet werden bzw. entspricht dieser Grundkontur, wobei die Bahnkurve in einer zweidimensionalen oder auch in einer dreidimensionalen Ausprägung vorliegen kann. Aus der normierten Grundstruktur können weitere Bahnkurven durch Koeffiziententausch in Funktionen zur Beschreibung der Bahnkurve berechnet werden.

In einer Ausgestaltung des Verfahrens zur Berechnung der Bahnkurve erfolgt die Normierung in einem definierten Wertebereich, welcher in einer Variation auch einstellbar ist und insbesondere von null bis eins reicht.

Mittels eines oder mehrerer Polygonsegmenten ist die Grundkontur beschreibbar. Die Polynomsegmente dienen also der Beschreibung der Bahnkurve.

Bei einer Änderung der Bahnkurve also bei einer Änderung der Grundkontur, wobei die Änderung mittels einer mathematisch beschreibbaren Vorschrift beschrieben werden kann, ist vorteilhafter Weise nicht mehr eine vollkommen neue von der alten Bahnkurve nicht herleitbare neue Bahnkurve zu verwenden. Für den Fall, dass die Änderung der Bahnkurve skaliert werden kann, wird die Skalierung vorteilhaft für die Erzeugung der Beschreibung der neuen Bahnkurve verwendet. Die Bahnkurve ist insbesondere auf dem Gebiet der Werkzeugmaschinen als eine Kurvenscheibe beschreibbar, wobei die Kurvenscheibe, also die Bahnkurve in einer Steuerungseinrichtung und/oder in einer Regelungseinrichtung gespeichert werden kann. Die Bahnkurve ist dann mittels der Steuerungseinrichtung und/oder der Regelungseinrichtung berechenbar und/oder abfahrbar. Zum Abfahren der Bahnkurve werden eine oder mehrere Achsen angesteuert bzw. geregelt gefahren.

Weisen die Polynomsegmente veränderbare Polynomkoeffizienten auf, können zur Änderung der Bahnkurve die Polynomkoeffizienten verändert werden. Dabei betrifft die Änderung der Bahnkurve insbesondere eine Änderung der Skalierung der Bahnkurve. Die Dimension ist also veränderbar, wobei die Proportionen gleich bleiben.

Ändert sich die Skalierung so werden die Polynomkoeffizienten angepasst und eine geometrisch ähnliche Kontur anderer Größe erzeugt.

In einer Ausführungsform der Berechnung der Bahnkurve werden zur Änderung der Dimension der Bahnkurve nicht mehr einzelne Punkte der Kurve separat und individuell zur Skalierung verschoben, sondern es werden Polynomkoeffizienten des bzw. der einzelnen Bahnsegmente neu berechnet. Die neu berechneten Polynomkoeffizienten werden in die Polynomfunktionen eingesetzt. Hieraus wird die neue Bahnkurve berechnet. Dies birgt Vorteile bezüglich einer geringeren Rechenzeit, welche zur Ermittlung einer neuen Bahnkurve aufzuwenden ist. Ein weiterer Vorteil der beschriebenen Methode kann in einer effizienteren Nutzung des Speichers liegen, der zum Abspeichern von verschiedenen Bahnkurven in Steuerungen bzw. Regelungen benötigt wird. Durch eine Reduzierung des Speicherbedarfs können insbesondere Hardwarekosten reduziert werden. Da die für die Bahnkurve im Speicher hinterlegte Datenmenge verkleinert werden kann, reduziert sich auch die Auslesezeit der Daten einer Bahnkurve. Dies ermöglicht eine schnelle Berechnung neuer Bahnkurven. Eine Berechnung kann insbesondere dann auch auf einem Prozessor einer Steuerung oder Regelung erbracht werden, dessen Rechenleistung ohne das beschriebene Verfahren nicht ausgereicht hätte.

Die berechnete Bahnkurve kann auch zur Beschreibung bzw. zum Abfahren einer geometrischen Kontur verwendet werden. Dies hängt vom jeweiligen Anwendungsfall ab.

In einer weiteren Ausgestaltung wird ein Polynomsegment durch einen Spline repräsentiert, wobei der Polynomspline zur Führungsgrößenerzeugung eines Bahninterpolators verwendet wird. Eine bzw. mehrere Bahnkurven sind also mittels eines Polynomsplines bzw. mehrerer Polynomsplines darstellbar. Der Polynomspline kann direkt zur Führungsgrößenerzeugung z.B. für einen Bahninterpolator verwendet werden, wodurch ein zeitaufwendiges interpolieren von Kurvenscheiben entfällt.

Durch eine Skalierung ist es möglich die Grundkontur lediglich einmal zu definieren. Danach kann diese stufenlos oder auch in Stufen vergrößert oder verkleinert werden. Die Veränderung der einmal definierten Grundkontur ist beispielsweise durch einen Anwender einer Maschine durchführbar oder auch automatisiert ausführbar.

In einem automatisierten Fertigungsprozess kann so produktabhängig bis zur Losgröße 1 eine Anpassung auf eine neue Kontur automatisiert erfolgen. Die Notwendigkeit der Verwendung einer neuen Kontur wird beispielsweise mittels Sensoren ermittelt, welche die Kontur eines betroffenen Werkstückes erfassen, wobei diese mit einer vorhandenen Grundkontur verglichen wird um nachfolgend zur Anpassung neue Polynomkoeffizienten zu ermitteln. Die Änderung von Polynomkoeffizienten kann auch automatisiert auf Basis vorhandener Produktionsdaten durchgeführt werden.

Bei der Veränderung der Grundkontur bzw. deren Skalierung kann es sich sowohl um eine lineare wie auch um eine nicht lineare Veränderung der Grundstruktur handeln. Ferner ist es in einer Ausgestaltung des beschriebenen Verfahrens möglich eine Auswahl darüber zu treffen, ob die Veränderung der Grundstruktur nur in Teilbereichen derselben oder insgesamt erfolgen soll.

Mittels der Veränderung lediglich von einem oder mehreren Polynomkoeffizienten, welche eine Grundlage der Beschreibung der Grundkontur mittels Polynomen bilden, ist es beispielsweise möglich flexibler auf aufschwankende Produkteigenschaften reagieren zu können, wenn dies die Grundkontur betrifft.

Ist beispielsweise die Grundkontur in einem Leitrechner hinterlegt, welcher einer Motion Control Steuerung übergeordnet ist, so ist bei einer Änderung der Grundstruktur ein Datenaustausch zwischen dem übergeordneten Leitrechner und der Motion Control Steuerung (Bewegungssteuerung/ -regelung) dadurch reduziert, dass beispielsweise nur noch ein Skalierungsfaktor übergeben werden muss, anstelle von einer Liste mit zahlreichen Stützstellen für die neue Kontur.

Aufgrund der reduzierten Datenmenge ist es auch möglich Bahnkurven, welche beispielsweise Verfahrkurven darstellen, in der Motion Control Steuerung online zu berechnen. Hierfür reicht die Rechenleistung und der Speicher in der Motion Control Steuerung oftmals aus. Somit sind geometrische Konturen bzw. Bahnkurven in einfacher Weise online skalierbar und berechenbar.

Ein komplexer und langer Datenaustausch zwischen dem Leitrechner (z.B. einer Leitsteuerung) und einem Motion Control Gerät über eine Daten-Bus-Verbindung zur Übermittlung einer von mehreren vorberechneten Kurvenscheiben, die im Leitrechner hinterlegt sind, ist nicht mehr notwendig. Die Übermittlung einer neuen Kurvenscheibe, definiert auf Basis einer großen Anzahl von Stützpunkten, ist nicht mehr notwendig.

Nachfolgend wird die Erfindung beispielhaft anhand der Zeichnungen näher erläutert, wobei
- FIG 1: eine Anwendung einer stützpunktbasierten Bahnkurve zum Garnieren einer Backware;
- FIG 2: eine Anwendung einer skalierbaren Bahnkurve zum Garnieren einer Backware;
- FIG 3: skalierte Konturen einer Bahnkurve; und
- FIG 4: eine weitere skalierte Bahnkurve, deren Start- bzw. Endpunkt im Koordinatennullpunkt liegt zeigt.

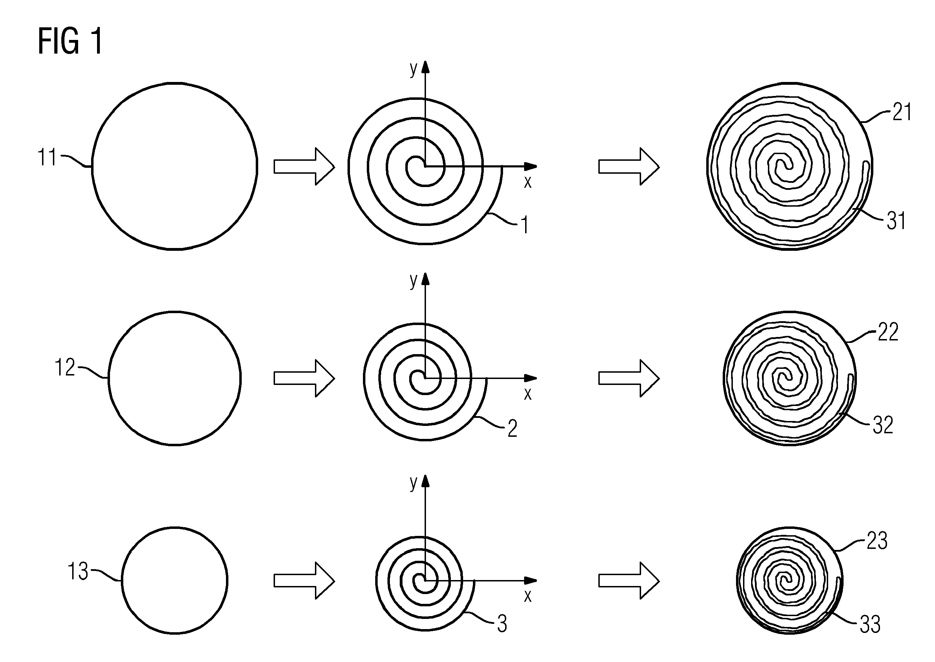

Die Darstellung gemäß FIG 1 zeigt drei Bahnkurven 1, 2 und 3 unterschiedlicher Größe, die zum Garnieren von Backwaren 11, 12 und 13 unterschiedlicher Größe vorgesehen sind. Die garnierten Backwaren 21, 22 und 23 weisen einen Schlagsahneauftrag 31, 32 und 33 auf, welcher mittels einer nicht dargestellten Auftrageinheit auf Basis der Bahnkurven 1, 2 und 3 auf der jeweiligen Backware aufgebracht ist. Die Bahnkurven 1, 2 und 3 sind jeweils in einem kartesischen Koordinatensystem mit den Achsen x und y dargestellt.

Bislang sind nach dem Stand der Technik für jede Produktgröße der Backware mindestens zwei Kurvenscheiben X(s) und Y(s) in einem Rechensystem zu hinterlegen. Möglicher Weise werden sogar mehr Kurvenscheiben hinterlegt, z.B. je Produktgröße sechs bis acht Kurvenscheiben, um auch auf Schwankungen eines unter Umständen pastösen Auftragsgutes wie Schlagsahne reagieren zu können. Das sind bei drei Produktgrößen 24 und mehr zu berechnende bzw. zu hinterlegende Kurvenscheiben.

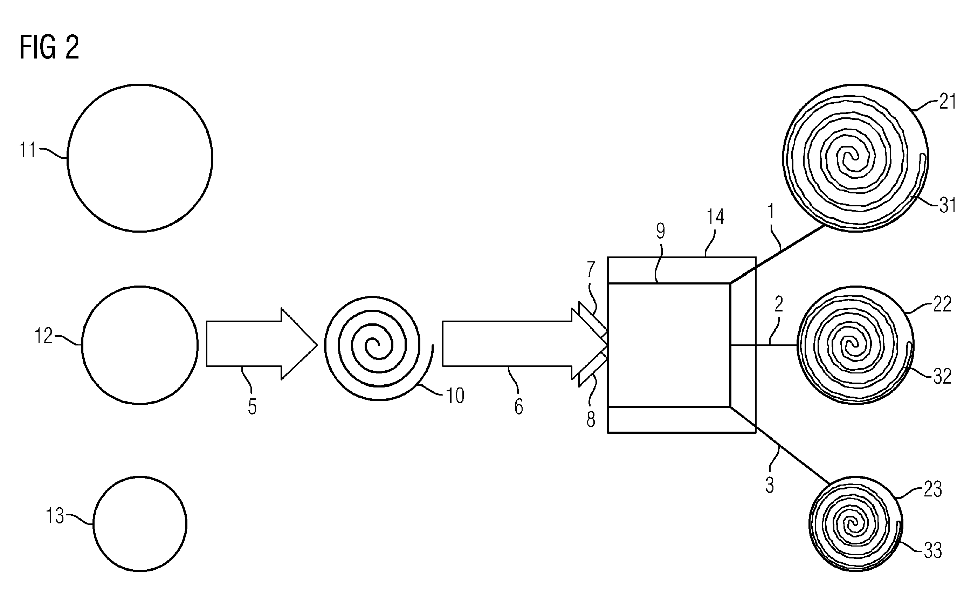

Die Darstellung gemäß FIG 2 zeigt eine andere Verfahrensweise. Die drei Backwaren 11, 12 und 13 unterschiedlicher Größe werden über einen Skalierungsfaktor 5 einer Basiskontur 10 zugeordnet. Diese Basiskontur 10 stellt eine normierte Bahnkurve dar, welche beispielsweise durch Polynomsplines beschreibbar ist. Mittels verschiedener Sätze von Polynomkoeffizienten 6, 7 und 8 werden über einen Interpolator 9 unterschiedliche Bahnkurven 1, 2 und 3 berechnet. Diese Bilden die Basis für die unterschiedlichen Sahneaufträge auf den garnierten Backwaren 21, 22 und 23. Durch die Definition der Kontur durch skalierbare Polynome lassen sich die für unterschiedliche Größen zu speichernden Daten reduzieren. Die Polynomkoeffizienten werden gemäß des Skalierungsfaktors nach bedarf neu berechnet. Der Interpolator 9 ist beispielsweise in einem Motion Controller 14 integriert.

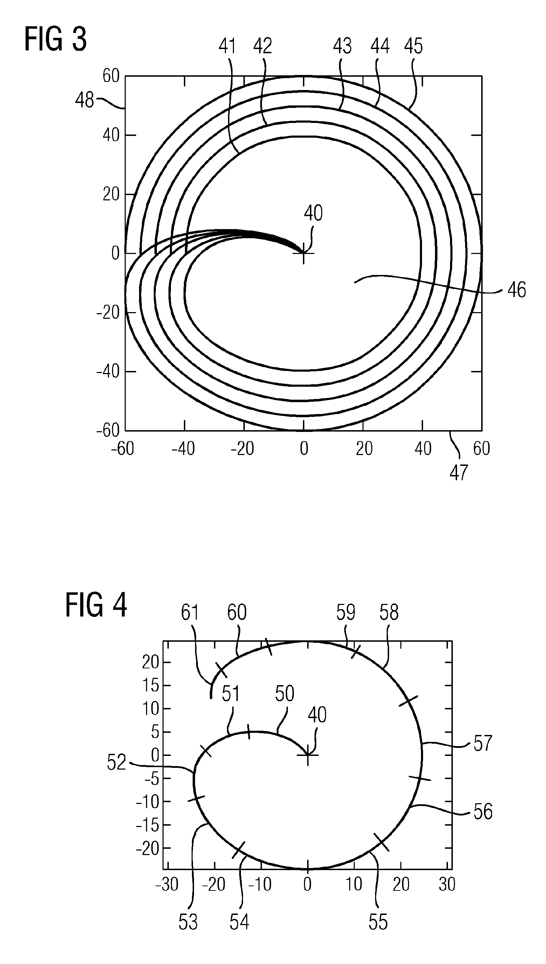

Die Darstellung gemäß FIG 3 zeigt skalierte Konturen 41, 42, 43, 44 und 45 für das Aufbringen von Sahne auf einem Schokopudding 46. Die jeweilige Skalierung geht aus der Achsenbeschriftung der Achsen 47 und 48 hervor. Ihren Startpunkt haben die Kurven im Nullpunkt 40

Die Darstellung gemäß FIG 4 zeigt eine Bahnkurve mit aneinandergereihten Bahnsegmenten 50 bis 61. Auch hier ist die Bahnkurve skalierbar, wobei die Koeffizienten des Polynoms bzw. Splines des jeweiligen Bahnsegmentes anzupassen sind.

Ein Algorithmus zur Berechnung der Bahnkurve kann für eine stufenlose Skalierung einer stetigen Bahnkurve vorgesehen sein. Ein entsprechendes Verfahren kann auf der Konstruktion einer Bahnkontur unter Verwendung von Bezier Polynomen beruhen. Bezier Polynome werden über Kontrollpunkte definiert. Ein Bezierpolynom 5. Ordnung benötigt z.B. 6 Kontrollpunkte. Je nach Lage der Kontrollpunkte ändert sich das Aussehen des Polynoms. Durch geeignete Anordnung der Kontrollpunkte können bestimmte Konturen z.B. Kreisbögen approximiert werden. Werden die Kontrollpunkte verbunden, entsteht ein Kontrollpolygon. Soll nun die Bahnkontur skaliert und/oder gedreht werden, muss nur noch das Kontrollpolygon skaliert und/oder gedreht werden. Dadurch wird Rechenzeit eingespart und eine Konturskalierung kann innerhalb weniger Interpolationstakte einer Bewegungssteuerung geschehen. Durch eine geeignete Anordnung der Bezier Punkte kann eine Stetigkeit der Kontur gesichert werden. Bezierpolynome können von Steuerungen mit integriertem Bahninterpolator verarbeitet werden. Es sind keine Kurvenscheiben mehr notwendig.

Die in den Figuren 1 bis 4 dargestellte Anwendung der Berechnung einer Bahnkurve ist natürlich nicht nur im Bereich Lebensmitteltechnik anwendbar, sondern auch in anderen Bereichen der Technik in welchen Bewegungssteuerungen/-regelungen Verwendung finden.

## Patentansprüche

1. Verfahren zur Berechnung einer Bahnkurve (1,2,3) für eine Maschine, wobei die Bahnkurve (1,2,3) in Bahnsegmente (50 bis 61) segmentiert ist, wobei insbesondere die Bahnkurve (1,2,3) einer normierten Grundkontur (10) entspricht.

2. Verfahren nach Anspruch 1, wobei die Normierung in einem Wertebereich erfolgt, welcher einstellbar ist und insbesondere von null bis eins reicht.

3. Verfahren nach Anspruch 1 oder 2, wobei Polynomsegmente (50 bis 61) zur Beschreibung der Bahnkurve (1,2,3) verwendet werden.

4. Verfahren nach Anspruch 3, wobei die Polynomsegmente (50 bis 61) Polynomkoeffizienten (6) aufweisen, wobei zur Änderung der Bahnkurve (1,2,3) die Polynomkoeffizienten (6,7,8) verändert werden, wobei die Änderung der Bahnkurve (1,2,3) insbesondere eine Änderung der Skalierung der Bahnkurve (1,2,3) betrifft.

5. Verfahren nach Anspruch 3 oder 4, wobei die Polynomkoeffizienten (6,7,8) neu berechnet werden, wenn die Bahnkurve (1, 2,3) geändert wird.

6. Verfahren nach einem der Ansprüche 1 bis 5, wobei die Bahnkurve (1,2,3) zur Berechnung einer geometrischen Kontur verwendet wird.

7. Verfahren nach einem der Ansprüche 3 bis 6, wobei ein Polynomsegment (50 - 61) durch einen Spline repräsentiert wird und der Polynomspline zur Führungsgrößenerzeugung eines Bahninterpolators (9) verwendet wird.
